# EUROPÄISCHE PATENTSCHRIFT

(11) **EP 1 792 133 B1**
(45) Veröffentlichungstag und Bekanntmachung des Hinweises auf die Patenterteilung: **26.08.2009**
(21) Anmeldenummer: 05783034.1
(22) Anmeldetag: 30.08.2005
(51) Int. Cl.: F27D 13/00, C22B 1/00, F27B 19/04

(54) **EINRICHTUNG ZUM HERSTELLEN VON FLÜSSIGEM STAHL**
DEVICE FOR PRODUCING LIQUID STEEL
DISPOSITIF POUR PRODUIRE DE L'ACIER LIQUIDE

(30) Priorität: 25.09.2004 DE 102004046728
(43) Veröffentlichungstag der Anmeldung: 06.06.2007
(73) Patentinhaber: SMS Siemag AG, 40237 Düsseldorf (DE)
(72) Erfinder: WEISCHEDEL, Walter, 40670 Meerbusch (DE); UEBBER, Norbert, 40764 Langenfeld (DE); FALKENRECK, Udo, 44797 Bochum (DE)
(74) Vertreter: Klüppel, Walter
(86) Internationale Anmeldenummer: PCT/EP2005/009353
(87) Internationale Veröffentlichungsnummer: WO 2006/032347

(56) Entgegenhaltungen:
- EP-A- 0 240 485
- WO-A-01/20046
- AT-B- 398 487
- DE-A1- 2 504 911
- DE-A1- 3 322 485
- DE-A1- 10 205 660
- RU-C1- 2 128 407
- US-A- 5 238 484
- US-A- 5 739 505
- MANFRED BENDER: "THE COMELT MELTSHOP: EFFICIENT, SIMPLE AND ... CONTINUOUS" GORHAM/INTERTECH CONSULTING CONFERENCE, 20. November 1996 (1996-11-20), Seiten 1-12, XP002370565 USA

## Beschreibung

Die Erfindung betrifft eine Einrichtung zum Herstellen von flüssigem Stahl auf Schrottbasis in einem Schachtofen als Einschmelzgefäß, der einem Überhitzungsgefäß vorgeordnet ist, wobei die Einsatzmaterialien in einem oberen Teil des Einschmelzgefäßes vorgewärmt, anschließend in einem unteren Teil mit fossilen Energieträgern geschmolzen werden und die Schmelze in das Überhitzungsgefäß abgeführt wird, in dem die Stahlanalyse und eine Überhitzungstemperatur eingestellt werden.

Die Druckschrift EP 0 240 485 beschreibt eine Anlage zur Herstellung von Stahl aus Schrott mit einem Schachtofenteil und einem Herdofenteil, in den die Vorschmelze aus dem Schachtofenteil überführbar ist. Das Herdofenteil benötigt mindestens eine weitere, mit elektrischer Energie betriebene Beheizungsvorrichtung zum Behandeln der Vorschmelze.

In der Druckschrift AT 398 487 wird ein Elektrolichtbogenofen zur Herstellung von Stahl durch Einschmelzen von Schrott beschrieben, bei dem mindestens eine Graphitelektrode in ein Unterteil des Ofengefäßes von der Seite hineinragt.

Aus der Druckschrift US 5 238 484 ist eine Anlage bekannt, mit der flüssige Metalle, insbesondere Stahl, hergestellt werden. Die Anlage weist ein Schmelzgefäß und ein metallurgisches Gefäß, zur Nachbehandlung der Schmelze, auf. Die Abstichöffnung für die Schmelze liegt in Höhe des Bodens des Schmelzgefäßes und ist oberhalb einer Eingießöffnung des metallurgischen Gefäßes.

Derartige Stahl-Erschmelzungsanlagen dienen der Bereitstellung von Schmelzenchargen, wie bspw. beim Stahl-Stranggießen zu Brammen unterschiedlicher Dicke bis zu Dünnsträngen im Bereich von 40-150 mm Dicke. Nach Abstich der Schmelze aus einem Elektrolichtbogenofen als Überhitzungsgefäß ist aufgrund der geringen, im Gefäß verbleibenden Restschmelze eine erheblich reduzierte Energiezufuhr oder ein Abschalten der Energiezufuhr notwendig, um ein zu hohes Überhitzen der Restschmelze und einen übermäßigen Verschleiß des Herdbodens zu vermeiden. Damit ist eine schwankende Nutzung der elektrischen Energie verbunden. Nachteilig ist auch, dass der Elektrolichtbogenofen und ein Pfannenofen räumlich erheblich voneinander entfernt sind, so dass beim Transportieren entsprechend hohe Energieverluste auftreten. Für den Elektrolichtbogenofen und den Pfannenofen muss eine separate elektrische Energiezufuhr vorgesehen werden.

Der Erfindung liegt die Aufgabe zugrunde, die aufgezeigten Verluste an elektrischer Energie im Elektrolichtbogenofen und im Pfannenofen durch übermäßiges Überhitzen im Elektrolichtbogenofen und durch Verluste bei der abhängigen Energiezufuhr im Pfannenofen erheblich zu reduzieren.

Eine Einrichtung zum Herstellen von flüssigem Stahl auf Schrottbasis in einem Schachtofen als Einschmelzgefäß, der einem Überhitzungsgefäß vorgeordnet ist, mit im unteren Teil des Einschmelzgefäßes angeordneter Brennereinrichtung für fossile Energieträger sowie ein mit dem unteren Teil des Einschmelzgefäßes über eine Abstichöffnung verbundenes Überhitzungsgefäß löst die Aufgabe dadurch, dass der Elektrolichtbogenofen im Unterofen durch eine Zwischenwand in zwei Bereiche aufgeteilt ist, wobei in Fließrichtung des flüssigen Stahls eine Überhitzungszone und - durch einen Schieberverschluss getrennt oder verbindbar - eine Analysenzone eingerichtet ist. Das Gefäß kann eine große Menge des Abstichgewichtes aufnehmen. In dem ersten Bereich kann in der Fließrichtung des Stahls das Überhitzen stattfinden und in dem zweiten Bereich eine metallurgische Behandlung, wie eine solche in dem Pfannenofen sonst stattfindet.

Die Energieverteilung wird nach weiteren Merkmalen dadurch noch vergleichmäßigt, dass das Überhitzungsgefäß auf Wägezellen gestellt ist und der zugeführte Schmelzenstrom aus dem Einschmelzgefäß unter Berücksichtigung der anderen Massenströme durch Differenzbildung der Messwerte ermittelt und zur Steuerung der Brennereinrichtung im Einschmelzgefäß eingesetzt wird.

Die Verbindung der Regelstrecke zwischen dem Einschmelzgefäß und dem Überhitzungsgefäß kann dadurch geschaffen werden, dass die elektrischen Daten, die von den Wägezellen über eine Messleitung der Massenstromerfassung und die elektrischen Daten der Bunker- und Dosierungseinrichtung über eine Messleitung an den Rechner geführt sind und dass der Rechner über eine Regelstrecke einer Erdgas- und Oxidationsmedienzufuhr die Schmelzleistung der im Einschmelzgefäß eingesetzten Brennereinrichtung steuert und dadurch den Stahlmassenstrom des aus dem Einschmelzgefäß in das Überhitzungsgefäß fließenden Schmelzenstroms steuert.

Die Kapazität der Ofenanlage kann derart sein, dass die beiden Bereiche etwa die doppelte Menge des normalen Abstichgewichtes eines vergleichbaren Elektrolichtbogenofens aufnehmen.

Zu dieser Bauweise werden sodann die beiden Bereiche des Überhitzungsgefäßes jeweils für sich mit einer eigenen Elektrodeneinheit versehen sein.

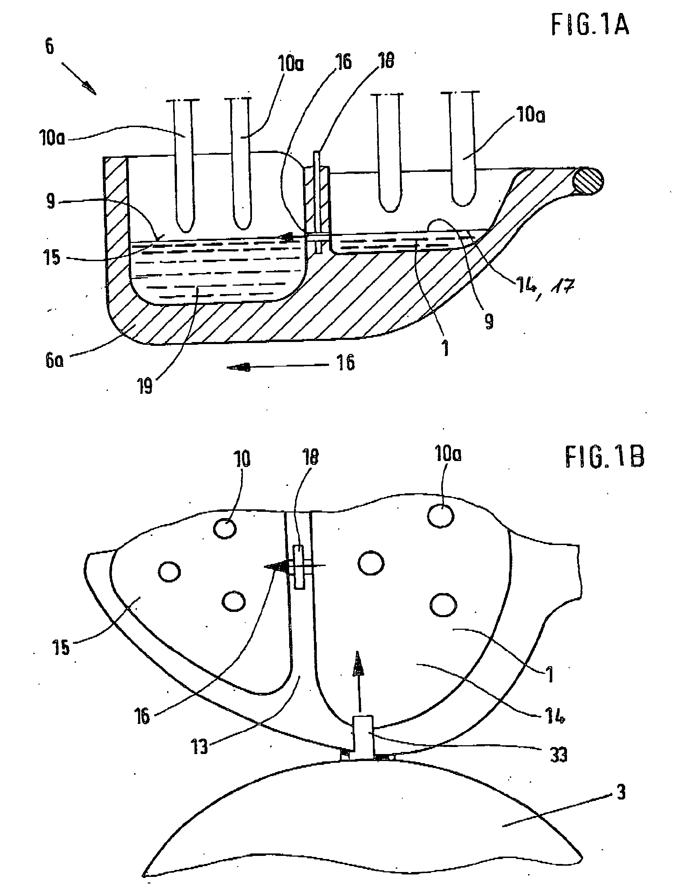

Der Beschreibung ist eine Zeichnung beigefügt, in welcher
- Fig. 1A: einen senkrechten Schnitt durch einen mit zwei Bereichen ausgebilde- ten Elektrolichtbogenofen; und
- Fig. 1B: die zu Fig. 1A gehörende Draufsicht
zeigt.

In der Zeichnung sind Ausführungsbeispiele der Erfindung dargestellt, die nachstehend näher erläutert werden.

In den Fig. 1A und 1B ist eine Gestaltung des Überhitzungsgefäßes 6 bzw. des Elektrolichtbogenofens und des Einschmelzgefäßes 3 aufgezeigt: Dazu ist das Überhitzungsgefäß 6 im Unterofen 6a durch eine Zwischenwand 13 in zwei Bereiche, einen ersten (rechten) Bereich 14 und einen zweiten (linken) Bereich 15 geteilt, wobei die beiden Bereiche 14, 15 in Fließrichtung 16 des flüssigen Stahls 1 durch einen Schieberverschluss 18 getrennt oder miteinander verbunden werden. Der rechte Bereich 14 bildet eine Überhitzungszone 17. Der linke, zweite Bereich 15 bildet eine Analysenzone 19. In den beiden Bereichen 14 und 15 des Überhitzungsgefäßes 6 sind unabhängige Elektrodeneinheiten 10 mit Elektroden 10a vorgesehen, die alternativ auch heb- und senkbar und schwenkbar sein können.

Wie in Fig. 1A gezeigt ist, liegt der Füllstand 9 des in Fließrichtung 16 zweiten (linken) Bereichs 15, in dem die metallurgische Behandlung gleich wie in einem Pfannenofen stattfindet, bei einem vollen Abstichgewicht gleich hoch oder tiefer als der Füllstand 9 in dem ersten Bereich 14. Hierzu kann der erste Bereich 14 weiterhin zum Einschmelzen der jeweiligen Charge parallel zur Einspeisung der Schmelze durch eine Rinne 33 aus dem Einschmelzgefäß 3 - Fig. 1B - genutzt werden. Ein anderer Vorteil besteht in der Speicherfähigkeit des zweiten Bereichs 15, aus dem jederzeit mit entsprechender Überhitzung flüssiger Stahl 1 entnommen werden kann. Der entnommene Anteil kann bspw. bei Störungen im Ablauf der Stranggießvorrichtung aus einem bisher unbekannten Vorrat an Stahl 1 auch als Flüssigstahlspeicher angesehen werden.

### Bezugszeichenliste

- 1: flüssiger Stahl
- 3: Einschmelzgefäß
- 6: Überhitzungsgefäß (Elektrolichtbogenofen)
- 6a: Unterofen
- 9: Füllstand
- 10: Elektrodeneinheit
- 10a: Elektrode
- 13: Zwischenwand
- 14: erster Bereich
- 15: zweiter Bereich
- 16: Fließrichtung
- 17: Überhitzungszone
- 18: Schieberverschluss
- 19: Analysenzone
- 33: Rinne

## Patentansprüche

1. Einrichtung zur Herstellung von flüssigem Stahl (1) auf Schrottbasis in einnem Schachtofen als Einschmelzgefäß (3), der einem Überhitzungsgefäß (6) vorgeordnet ist, mit im unteren Teil (3b) des Einschmelzgefäßes (3) angeordneter Brennereinrichtung für fossile Energieträger (4), sowie ein mit dem unteren Teil (3b) des Einschmelzgefäßes (3) über eine Abstichöffnung verbundenes Überhitzungsgefäß (6),
**dadurch gekennzeichnet,**
**dass** der Elektrolichtbogenofen (6) im Unterofen (6a) durch eine Zwischenwand (13) in zwei Bereiche (14; 15) aufgeteilt ist, wobei in Fließrichtung (16) des flüssigen Stahls (1) eine Überhitzungszone (17) und - durch einen Schiebeverschluss (18) getrennt oder verbindbar - eine Analysezone (19) eingerichtet ist.

2. Einrichtung nach Anspruch 1,
**dadurch gekennzeichnet,**
**dass** das Überhitzungsgefäß (6) auf Wägezellen gestellt ist und der zugeführte Schmelzenstrom aus dem Einschmelzgefäß (3) unter Berücksichtigung der anderen Massenströme durch Differenzbildung der Messwerte ermittelt und zur Steuerung der Brennereinrichtung im Einschmelzgefäß (3) eingesetzt wird.

3. Einrichtung nach Anspruch 2,
**dadurch gekennzeichnet,**
**dass** elektrischen Daten, die von den Wägezellen über eine Messleitung der Massenstromerfassung und die elektrischen Daten einer Bunker- und Dosierungseinrichtung über eine Messleitung an einen Rechner geführt sind und dass der Rechner über eine Regelstrecke einer Erdgas- und Oxidationsmedienzufuhr die Schmelzleistung der im Einschmelzgefäß (3) eingesetzten Brennereinrichtung steuert und **dadurch** den Stahlmassenstrom des aus dem Einschmelzgefäß (3) in das Überhitzungsgefäß (6) fließenden Schmelzenstroms steuert.

4. Einrichtung nach Anspruch 1,
**dadurch gekennzeichnet,**
**dass** die beiden Bereiche (14; 15) des Überhitzungsgefäßes (6) jeweils für sich mit einer eigenen Elektrodeneinheit (10) versehen sind.

## Claims

1. Equipment for producing liquid steel (1) on a scrap basis in a shaft furnace as melting vessel (3), which is arranged upstream of a superheating vessel (6), with burner equipment, which is arranged in the lower part (3b) of the melting vessel (3), for fossil energy carriers (4), as well as a superheating vessel (6) connected with the lower part (3b) of the melting vessel (3) by way of a tap opening, **characterised in that** the electric arc furnace (6) is divided in the lower furnace (6a) by an intermediate wall (13) into two regions (14; 15), wherein provided in flow direction (16) of the liquid steel (1) are a superheating zone (17) and - separated or connectible by a closure slide (18) - an analysis zone (19).

2. Equipment according to claim 1, **characterised in that** the superheating vessel (6) is placed on weighing cells and the supplied melt flow from the melting vessel (3) is ascertained with consideration of the other mass flows by difference formation of the measurement values and is employed for controlling the burner equipment in the melting vessel (3).

3. Equipment according to claim 2, **characterised in that** electrical data which are from the weighing cells are fed by way of a measuring line of the mass flow detection means, and the electrical data of a bunker and metering equipment are fed by way of a measuring line, to a computer and that the computer by way of a regulating path of an earth gas and oxidation medium feed controls the melting performance of the burner equipment used in the melting vessel (3) and thereby controls the steel mass flow of the melt flow flowing out of the melting vessel (3) into the superheating vessel (6).

4. Equipment according to claim 1, **characterised in that** the two regions (14; 15) of the superheating vessel (6) are each individually provided with an own electrode unit (10).

## Revendications

1. Dispositif pour produire de l'acier liquide (1) à partir de ferraille dans un four à cuve tenant lieu de cuve de fusion (3), qui est disposée en amont d'une cuve de surchauffe (6), comportant un dispositif de brûleur de sources d'énergie fossiles (4) disposé dans la partie inférieure (3b) de la cuve de fusion (3), ainsi que une cuve de surchauffe (6) reliée par l'intermédiaire d'une ouverture de coulée avec la partie inférieure (3b) de la cuve de fusion (3),
**caractérisé en ce que**
le four à arc électrique (6) est divisé dans le four inférieur (6a) en deux zones (14 ;15) par une paroi intermédiaire (13), moyennant quoi dans la direction d'écoulement (16) de l'acier liquide (1) une zone de surchauffe (17) et une zone d'analyse (19) -séparée ou pouvant être reliée par une obturation coulissante (18) - sont agencées.

2. Dispositif selon la revendication 1,
**caractérisé en ce que**
la cuve de surchauffe (6) est placée sur des cellules de pesée et le courant de masse fondue introduit à partir de la cuve de fusion (3) est déterminé en tenant compte des autres courants de masse par formation de la différence des valeurs de mesure et est employé pour commander le dispositif de brûleur dans la cuve de fusion (3).

3. Dispositif selon la revendication 2,
**caractérisé en ce que**
des données électriques, qui sont introduites depuis les cellules de pesée via un câble de mesure de la détection du courant de masse, et les données électriques d'un dispositif de silo et de dosage sont guidées par l'intermédiaire d'un câble de mesure vers un ordinateur et **en ce que** l'ordinateur commande par l'intermédiaire d'une voie de régulation d'une alimentation en gaz naturel et en milieux d'oxydation le rendement de fusion du dispositif de brûleur employé dans la cuve de fusion (3) et commande de cette manière le courant de masse d'acier du courant de matière en fusion s'écoulant dans la cuve de surchauffe (6) à partir de la cuve de fusion (3).

4. Dispositif selon la revendication 1,
**caractérisé en ce que**
les deux zones (14 ;15) de la cuve de surchauffe (6) sont respectivement pourvues d'une unité d'électrode (10) propre.
